**Europäisches Patentamt**

**European Patent Office**

**Office européen des brevets**

(19)

(11) Veröffentlichungsnummer: **0 059 501**
**B1**

(12)

# EUROPÄISCHE PATENTSCHRIFT

(45) Veröffentlichungstag der Patentschrift:
24.07.85

(21) Anmeldenummer: **82200187.1**

(22) Anmeldetag: **17.02.82**

(51) Int. Cl.⁴: **A 22 C 11/12**

(54) **Verfahren und Vorrichtung zum Füllen und Verschliessen von Würsten.**

(30) Priorität: **03.03.81 DE 3108015**

(43) Veröffentlichungstag der Anmeldung:
**08.09.82 Patentblatt 82/36**

(45) Bekanntmachung des Hinweises auf die Patenterteilung:
**24.07.85 Patentblatt 85/30**

(84) Benannte Vertragsstaaten:
**DE**

(56) Entgegenhaltungen:
**AU - A - 470 729**
**DE - A - 1 586 210**
**DE - A - 2 546 733**
**DE - A - 2 730 121**
**DE - B - 1 123 588**
**US - A - 2 880 419**
**US - A - 3 377 692**
**US - A - 3 543 378**

(73) Patentinhaber: **Niedecker, Herbert, Dipl.-Ing., Am Ellerhang 6, D-6240 Königstein 2 (DE)**

(72) Erfinder: **Niedecker, Herbert, Dipl.-Ing., Am Ellerhang 6, D-6240 Königstein 2 (DE)**

(74) Vertreter: **Fischer, Ernst, Dr., Reuterweg 14, D-6000 Frankfurt am Main 1 (DE)**

**Beschreibung**

Die Erfindung betrifft ein Verfahren und eine Vorrichtung zum Füllen und Verschliessen von Würsten auf kombinierten synchrongesteuerten Füll- und Verschliessmaschinen. Es ist bekannt, bei derartigen Maschinen über ein Füllrohr, auf das Kunst- oder Naturdarm aufgezogen ist, eine an einem Ende verschlossene Wurst durch ein von der geöffneten Rafferklappe und der Schlossplatte der Verschliessmaschine gebildeten Öffnung zu füllen und anschliessend mit einer an der Verschliessmaschine angebrachten schwenkbaren Rafferklappe abzuteilen und dann mit einer U-förmigen Verschlussklammer von einem Stempel auf der Matrize zu verschliessen (CH-A-427 546). Bei dieser bekannten Arbeitsweise liegen aber die Mittelachse der Wurst während des Füllvorganges und die Verschliessstelle der Verschliessmaschine während des Verschliessvorganges ausserhalb der Mittelachse des Füllrohres. Dies hat den Nachteil, dass die Wursthülle beim Schliessen der Rafferklappe und beim Verschliessvorgang an einer Stelle über die Füllrohrkante gezogen und dadurch erheblich mechanisch beansprucht wird. Dadurch besteht die Gefahr der Beschädigung der Wursthülle, besonders bei empfindlichen Därmen. Ausserdem sitzt bei diesen Verschliessvorgängen der den Verschluss tragende Zopf der Wurst häufig nicht zentral auf dem Wurstende. Dies führt – abgesehen von dem unerwünschten Aussehen – dazu, dass das Ende der Wurst leichter zum Platzen neigt. Ausserdem kann das verschlossene Ende der Wurst, insbesondere bei grösseren Kalibern, leichter an den Abteil- oder Verschliesswerkzeugen hängenbleiben. Der Erfindung liegt die Aufgabe zugrunde, diese Nachteile zu vermeiden.

Die Lösung dieser Aufgabe liegt darin, dass bei einem eingangs geschilderten Verfahren, bei dem über ein Füllrohr, auf das Kunst- oder Naturdarm aufgezogen ist, eine an einem Ende verschlossene Wurst durch eine von der geöffneten Rafferklappe und der Schlossplatte der Verschliessmaschine gebildeten Öffnung gefüllt und anschliessend mit einer an der Verschliessmaschine angebrachten schwenkbaren Rafferklappe abgeteilt und dann mit einer U-förmigen Verschlussklammer mit einem Stempel auf der Matrize verschlossen wird, wobei die Wursthülle während des Füllvorganges etwa mittig durch die von der geöffneten Rafferklappe und der Schlossplatte gebildeten Öffnung der Verschliessmaschine hindurchtritt, erfindungsgemäss nach Abschluss des Füllvorganges während des Schliessens der Rafferklappe die Verschliessstelle zwischen Stempel und Matrize durch Anheben der Verschliessmaschine oder durch Schwenken des Füllrohres etwa zentrisch vor die Austrittsöffnung des Füllrohres gebracht und die gefüllte Wurst anschliessend mit der Klammer verschlossen wird. Bei der erfindungsgemässen Vorrichtung ist die Verschliessstelle während des Füllvorganges ausserhalb der durch Rafferklappe und Schlossplatte gebildeten Öffnung und nach dem Verschliessen der Rafferklappe während des Verschliessens des Wurstzopfes zentrisch vor der Füllrohraustrittsöffnung angeordnet.

Das erfindungsgemässe Verfahren und die entsprechende Vorrichtung haben den Vorteil, dass die Gefahren vermieden werden, die bestehen, wenn die Verschliessstelle der Verschliessmaschine während des Verschliessens ausserhalb der Mittelachse des Füllrohres liegt. Durch das erfindungsgemässe Verfahren ist es möglich, grössere Wurstkaliber, z.B. über 40 mm, sicherer und fehlerfreier zu verschliessen. Ausserdem können empfindliche Därme mit höherer Leistung verarbeitet werden.

Das Verbringen der Verschliessstelle zwischen Stempel und Matrize etwa zentrisch vor die Austrittsöffnung des Füllrohres erfolgt in der Regel während des Schliessens der Rafferklappe; jedoch soll von der Erfindung auch erfasst werden, wenn das Verbringen vor oder kurz nach dem Schliessen der Rafferklappe erfolgt. Die Verschliessmaschine setzt um den von der Rafferklappe erfassten Darm entweder eine oder in einem gewissen Abstand gleichzeitig zwei Verschlussklammern. Nach beendetem Verschliessvorgang wird die Verschliessmaschine bzw. das Füllrohr in ihre Ausgangslage zurückgebracht.

Das erfindungsgemässe Verfahren und die entsprechende Vorrichtung werden in den nachfolgenden Zeichnungen im einzelnen beschrieben:

Fig. 1 zeigt eine Seitenansicht einer Verschliessmaschine, zu der das Füllrohr etwa mittig vor der Öffnung angebracht ist;

Fig. 2 zeigt eine Verschliessmaschine, bei der die Verschliessstelle etwa zentrisch vor die Austrittsöffnung des Füllrohres gebracht ist;

Fig. 3 zeigt eine Vorderansicht einer Füll-Verschliesskombination, bei der die Verschliessstelle nicht zentrisch vor die Austrittsöffnung des Füllrohres gebracht ist;

Fig. 4 zeigt eine Vorderansicht gemäss Fig. 1 und

Fig. 5 zeigt eine Vorderansicht gemäss Fig. 2

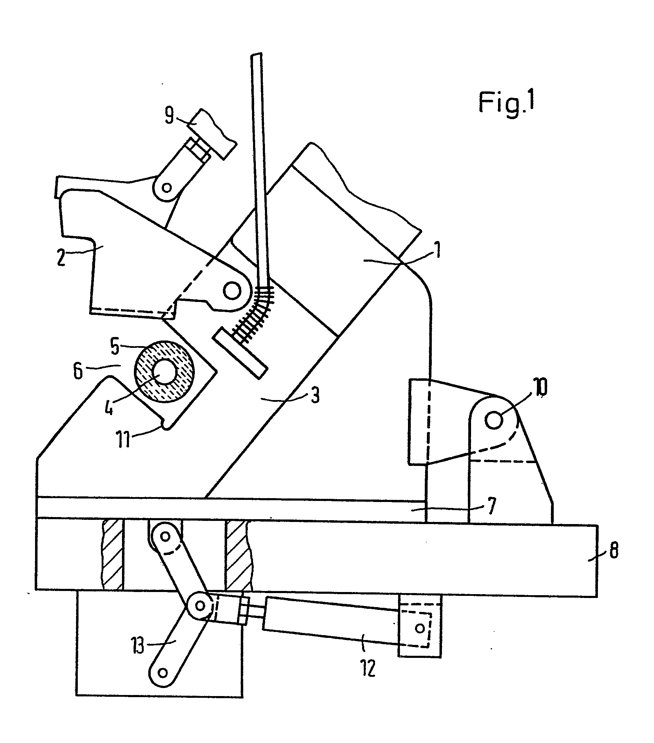

In Fig. 1 zeigt eine Seitenansicht die Verschliessmaschine 1 mit geöffneter Rafferklappe 2, die drehbar an der Schlossplatte 3 gelagert ist. Die Füllrohraustrittsöffnung 4 befindet sich während des Füllens der Wurst 5 in etwa mittiger Stellung zu der aus Rafferklappe 2 und Schlossplatte 3 gebildeten Öffnung 6. In dieser Stellung ruht die Verschliessmaschine 1 mit der Fussplatte 7 auf der Grundplatte 8.

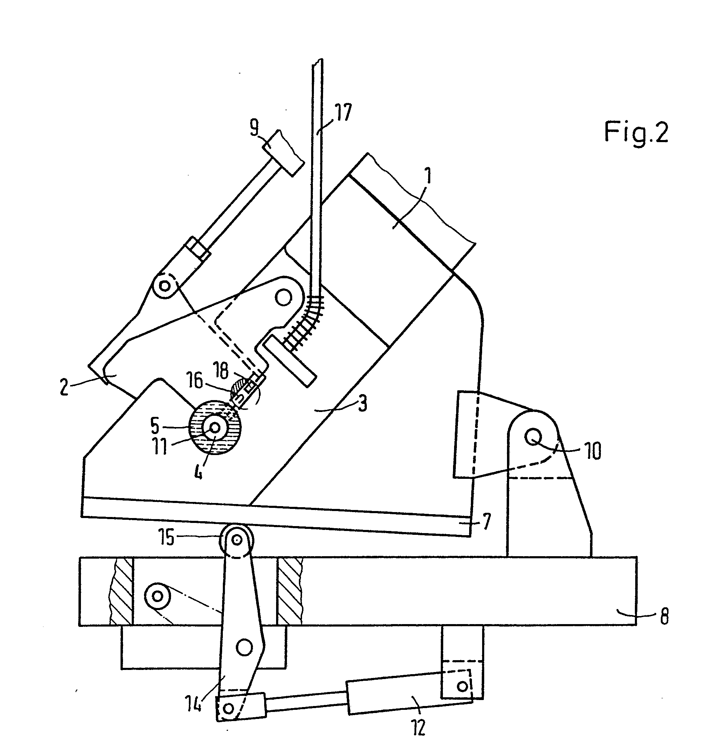

In Fig. 2 ist die Rafferklappe 2 mit einem Antrieb 9 geschlossen. Während, vor oder nach dem Verschliessen der Rafferklappe 2 wird die Verschliessmaschine 1 über den Drehpunkt 10 durch einen Hebemechanismus angehoben und so die Verschliessstelle 11 mit der Wurst 5 etwa zentrisch vor die Füllrohraustrittsöffnung 4 gebracht.

Der Hebemechanismus besteht in Fig. 1 aus einem Hubzylinder 12 und einem Kniehebel 13. In Fig. 2 betätigt der Hubzylinder 12 einen Hebelarm 14 mit einer Auflaufrolle 15.

Die U-förmige Verschlussklammer 16 wird aus einem Klammermagazin 17 durch einen Stempel 18 auf die Verschliessstelle 11 geführt.

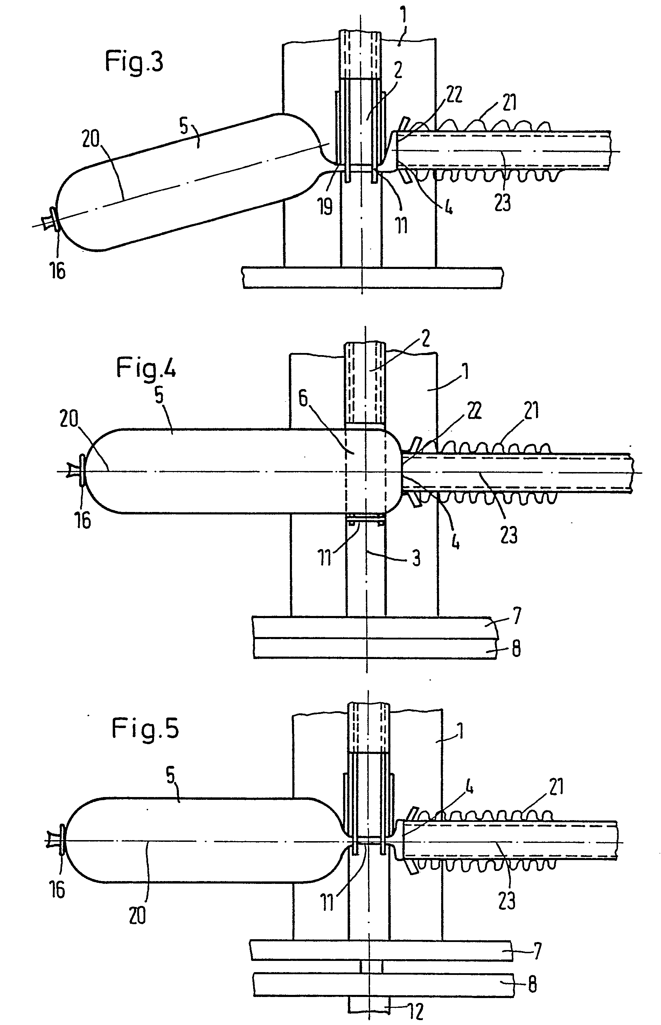

Fig. 3 zeigt eine Vorderansicht einer Füll-Verschliesskombination mit einer gefüllten und von der Rafferklappe 2 abgeteilten Wurst 5 nach dem Stand der Technik, wobei also die Verschliessstelle 11 der Verschliessmaschine 1 nicht mit einem Hebemechanismus etwa zentrisch vor die Füllrohraustrittsöffnung 4 und die Füllrohrachse 23 gebracht ist. Dadurch sitzt der Wurstzopf 19 nicht in der Mittelachse 20 der Wurst 5 und der Darm 21 wird über die Füllrohrkante 22 gezogen, was die eingangs erwähnten Nachteile zur Folge hat.

Fig. 4 zeigt beim erfindungsgemässen Verfahren die Vorderansicht einer Füll-Verschliesskombination mit der Wurst 5 während des Füllvorganges, wobei die Wurst 5 mittig durch die von der Rafferklappe 2 und Schlossplatte 3 gebildete Öffnung 6 gefüllt wird und die Wurstachse 20 mit der Füllrohrachse 23 übereinstimmt. Die Fussplatte 7 der Verschliessmaschine 1 ruht dabei auf der Grundplatte 8.

In Fig. 5 ist die Fussplatte 7 der Verschliessmaschine 1 angehoben, so dass die Verschliessstelle 11 sich etwa zentrisch vor der Füllrohraustrittsöffnung 4 und somit etwa in der Füllrohrachse 23 befindet. Nach beendetem Verschliessvorgang wird die Verschliessmaschine 1 wieder in die Position gemäss Fig. 4 gebracht.

**Patentansprüche**

1. Verfahren zum Füllen und Verschliessen von Würsten auf kombinierten synchrongesteuerten Füll- und Verschliessmaschinen, wobei über ein Füllrohr, auf das Kunst- oder Naturdarm (21) aufgezogen ist, eine an einem Ende verschlossene Wurst durch eine von der geöffneten Rafferklappe (2) und der Schlossplatte (3) der Verschliessmaschine (1) gebildete Öffnung (6) gefüllt, anschliessend mit der an der Verschliessmaschine (1) angebrachten schwenkbaren Rafferklappe (2) abgeteilt und dann mit einer U-förmigen Verschlussklammer (16) von einem Stempel (18) auf der Matrize verschlossen wird, wobei die Wursthülle (21) während des Füllvorganges etwa mittig durch die von der geöffneten Rafferklappe (2) und der Schlossplatte (3) gebildeten Öffnung (6) der Verschliessmaschine (1) hindurchtritt, dadurch gekennzeichnet, dass nach Abschluss des Füllvorganges während des Schliessens der Rafferklappe (2) die Verschliessstelle (11) zwischen Stempel (18) und Matrize durch Anheben der Verschliessmaschine (1) oder durch Schwenken des Füllrohres etwa zentrisch vor die Austrittsöffnung (4) des Füllrohres gebracht und die gefüllte Wurst (5) anschliessend mit der Klammer (16) verschlossen wird.

2. Vorrichtung zum Füllen und Verschliessen von Würsten auf kombinierten synchrongesteuerten Füll- und Verschliessmaschinen, bestehend aus einem Füllrohr, auf das der Kunst-oder Naturdarm (21) aufgezogen wird, aus einer schwenkbaren Rafferklappe (2), die im geöffneten Zustand mit der Schlossplatte (3) der Verschliessmaschine eine Öffnung (6) bildet, durch die die Wursthülle (21) während des Füllvorganges etwa mittig hindurchtritt, aus einem Stempel (18) und einer Matrize, auf der die U-förmige Verschlussklammer (16) nach dem Füllen der Wursthülle (21) um das von der Rafferklappe (2) zusammengedrückte Wurstende verschlossen wird, dadurch gekennzeichnet, dass die Verschliessstelle (11) der Verschliessmaschine (1), die während des Füllvorganges ausserhalb der durch Rafferklappe (2) und Schlossplatte (3) gebildeten Öffnung (6) angeordnet ist, nach dem Verschliessen der Rafferklappe (2) während des Verschliessens des Wurstzopfes (19) durch einen Hebemechanismus (12, 13, 14, 15) über einen Drehpunkt (10) zentrisch vor die Füllrohraustrittsöffnung (4) angehoben wird.

3. Vorrichtung nach Anspruch 2, dadurch gekennzeichnet, dass anstelle des Hebemechanismus (12, 13, 14, 15) für die Verschliessmaschine (1) ein Schwenkmechanismus für das Füllrohr vorgesehen ist, der die Füllrohraustrittsöffnung (4) zentrisch vor die Verschliessstelle (11) schwenkt.

**Claims**

1. A process of filling and sealing sausages on combined, synchronously controlled filling and closing machines, wherein a sausage closed at one end is filled through a filling tube on which a synthetic or natural casing (21) has been fitted, and through an opening (6) defined by the opened gathering flap (2) and the backing plate (3) of the closing machine (1), and the sausage is subsequently divided off by means of the hinged gathering flap (2) mounted on the closing machine (1) and is subsequently closed with a U-shaped closing clip (16) by a punch (18) cooperating with the die, wherein the sausage casing (21) passes during the filling operation approximately centrally through the opening (6) which is defined in the closing machine (1) by the opened gathering flap (2) and the backing plate (3), characterized in that when the filling operation has been completed the gathering flap (2) is being closed and during that closing the closing machine (1) is raised or the filling tube is pivotally moved so that the closing gap (11) between the punch (18) and the die is moved to a position in which said gap approximately centrally disposed in front of the outlet opening (4) of the filling tube, and the filled sausage (5) is subsequently closed with the clip (16).

2. Apparatus for filling and closing sausages on combined synchronously controlled filling and closing machines, comprising a filling tube, on which the synthetic or natural casing (21) is fitted, a hinged gathering flap (2), which in an open position defines with the backing plate (3) of the closing machine an opening (6), through which the sausage casing (21) extends approximately centrally during the filling operation, a punch (18), and a die, on which the U-shaped closing clip (16) is closed around the sausage end portion which has been compressed by the gathering flap, when the sausage casing (21) has been filled, characterized in that the closing gap (11) of the closing machine (1) is disposed during the fulling operation outside the opening (6) defined by the gathering flap (2) and the backing plate (3) and when the gathering flap (2) has been closed and the end portion 19 of the sausage is being closed said gap is raised by a lifting mechanism (12, 13, 14) around a pivot (10) to a position in which said gap is centred in front of the outlet opening (4) of the filling tube.

3. Apparatus according to claim 2, characterized in that the lifting mechanism (12, 13, 14, 15) for the closing machine (1) has been replaced by a mechanism for pivotally moving the filling tube so that the outlet opening (4) of the filling tube is pivotally moved to a position in which it is centred in front of the closing gap (11).

## Revendications

1. Procédé pour le remplissage et la fermeture de saucisses sur des machines combinées de remplissage et de fermeture à commande synchronisée dans lequel, on remplit, par l'intermédiaire d'un tube de remplissage sur lequel est engagé un boyau synthétique ou naturel (21), une saucisse fermée à une extrémité, via une ouverture (6) formée par le clapet de contractage (2) relevé et par la plaque d'arrêt (3) de la machine de fermeture (1), on sépare ensuite la saucisse au moyen du clapet de contractage basculable (2) agencé dans la machine de fermeture (1), puis on la ferme sur la matrice à l'aide d'une agrafe (16) en forme de U au moyen d'un poinçon (18), le boyau (21) passant – lors de l'étape de remplissage – environ par le milieu de l'ouverture (6) formée par le clapet de contractage (2) relevé et par la plaque d'arrêt (3) de la machine de fermeture (1), caractérisé en ce que, après la fin de l'étape de remplissage, pendant la fermeture du clapet de contractage (2), on porte le point de fermeture (11) situé entre le poinçon (18) et la matrice, environ de manière centrée en face de l'ouverture de sortie (4) du tube de remplissage, en soulevant la machine de fermeture (1) ou en basculant le tube de remplissage et en ce qu'on ferme ensuite la saucisse remplie (5) au moyen de l'agrafe (16).

2. Dispositif pour le remplissage et la fermeture de saucisses sur des machines combinées de remplissage et de fermeture à commande synchroniseée, consistant en un tube de remplissage sur lequel est engagé un boyau synthétique ou naturel (21), en un clapet de contractage basculable (2) qui, à l'état ouvert, forme une ouverture (6) avec la plaque d'arrêt (3) de la machine de fermeture, ouverture traversée environ dans son milieu par le boyau (21) lors de l'étape de remplissage, en un poinçon (18) et une matrice sur laquelle l'agrafe de fermeture en forme de U (16) est serrée autour de l'extrémité de saucisse écrasée par le clapet de contractage (2), après le remplissage du boyau (21), caractérisé en ce que le point de fermeture (11) de la machine de fermeture (1), qui, lors de l'étape de remplissage, est disposé en dehors de l'ouverture (6) formée par le clapet de contractage (2) et la plaque d'arrêt (3), est relevé de manière centrée en face de l'ouverture de sortie du tube de remplissage (4) au moyen d'un mécanisme de levage (12, 13, 14, 15) via un point d'articulation (10), après la fermeture du clapet de contractage (2) et pendant la fermeture du bout de la saucisse (19).

3. Dispositif selon la revendication 2, caractérisé en ce que, au lieu du mécanisme de levage (12, 13, 14, 15) de la machine de fermeture 1, il est prévu un mécanisme de basculement du tube de remplissage qui permet de faire basculer l'ouverture de sortie (4) du tube de remplissage de manière centrée en face du point de fermeture (11).

Fig.1

Fig.2

Fig.3

Fig.4

Fig.5